# EUROPEAN PATENT APPLICATION

(11) **EP 4 718 644 A1**
(43) Date of publication of application: **01.04.2026**
(21) Application number: 24203401.5
(22) Date of filing: 27.09.2024
(51) Int. Cl.: H01S 3/00

(54) **APPARATUS FOR FOCUSING A HIGH-POWER LASER**

(71) Applicant: Marvel Fusion GmbH, 80339 Munich (DE)
(72) Inventor: SCUTELNIC, Valeriu, 80339 München (DE); SPEICHER, Martin, 80339 München (DE); GAUL, Erhard, 80339 München (DE); RIVAS, Daniel, 80339 München (DE); SCHOLLMEIER, Marius, 80339 München (DE); GONZALEZ-IZQUIERDO, Bruno, 80339 München (DE)
(74) Representative: HKW Intellectual Property PartG mbB

(57) **Abstract**

The present disclosure relates to an apparatus (300) for focusing a beam (3) of a high-power laser (100), comprising an optical configuration of two or more curved plasma mirrors (1, 2) configured to focus the beam (3) of the high-power laser (100). When the optical configuration is arranged with respect to a main axis (A) of the beam (3) of the high-power laser (100), a first curved plasma mirror (1) of the two or more curved plasma mirrors (1, 2) is arranged on the main axis (A) of the beam (3) of the high-power laser (100), and a second curved plasma mirror (2) of the two or more curved plasma mirrors (1, 2) is arranged off-axis with respect to the main axis (A) of the beam (3) of the high-power laser (100), wherein the first curved plasma mirror (1) is configured to reflect the beam (3) of the high-power laser (100) in the direction of the second curved plasma mirror (2) of the two or more curved plasma mirrors (1, 2).

## Description

### TECHNICAL FIELD

The present disclosure relates to an apparatus for focusing a beam of a high-power laser, in particular, an apparatus including two or more plasma mirrors for focusing a beam of a high-power laser, in particular further for aberration correction, contrast control and/or intensity control. Furthermore, the present disclosure relates to a system comprising a high-power laser and such apparatus for focusing the beam of the high-power laser. One may refer to an anastigmatic multi-plasma-mirror configuration for simultaneous contrast and intensity control for high-power lasers.

### TECHNICAL BACKGROUND

High-power, short-pulse lasers - with a peak power that ranges from Terawatt to multi Petawatt - open new horizons in laser-plasma physics for the generation of high energy particles and electromagnetic radiation for future applications in medicine or material science and are deemed to be a plausible path to energy generation via nuclear fusion, see, e.g., document "Petawatt and exawatt class lasers worldwide" by C. N. Danson et al., High Power Laser Science and Engineering, Vol. 7, August 2019.

However, producing and controlling high-power laser pulses with energy between tens and thousands of Joules presents many technological challenges and requires large-aperture, meter-class and high-surface-quality optics. Such specialized, cutting-edge optics are not readily available and have a long lead time, which results in high costs of manufacturing.

For this reason, high-power laser facilities around the world are designed with a fixed numerical aperture (NA) of the final focusing optic, which usually represents an off-axis parabolic mirror for short focal lengths (f/# ≲ 10, where the f-number is given by the ratio of focal length F of the optics and laser beam diameter D) or a long-focal-length (f/# > 10) off-axis parabolic or spherical mirror for producing a focus.

After the compressor, the focusing optics can be exclusively reflective, because any transmissive optics, such as a lens, are prone to damage due to the high laser intensity and can introduce temporal, spectral and spatial aberrations to the laser pulse.

Depending on the intended application, the intensity achievable at the laser focus may need to be tuned, e.g., by controlling pulse duration and pulse energy: temporally stretching the pulse or reducing the energy result in lower intensities at the focus (both methods may be related to significant drawbacks for applications). This factor restricts the users to a narrow range of available intensities on the target.

Higher intensities at the focus can be achieved by implementing an optical system with a resulting larger NA (smaller f/#) of the beam. However, replacing the focusing optic for this purpose is oftentimes very complex due to cost, space or manufacturing time constraints. Instead, it may be preferable to add supplementary optics or focusing optical configurations in the converging beam after the initial focusing optical element or after an intermediate focus to re-focus the beam with a higher NA (smaller f/#) to achieve a higher laser intensity at the interaction point with a sample.

In addition to the refocusing problem, application of high intensity laser pulses may be limited by the temporal intensity contrast. It is defined as the ratio of the intensity of preceding the main pulse (e.g. pre-pulses or pedestals) to the peak of the intensity. Such pre-pulses or pedestals can be caused by several factors, e.g., spontaneous emission in the amplifying laser medium, parametric fluorescence, scattering from rough surfaces, back-reflected post-pulses being converted into pre-pulses in the amplifier, or uncompensated dispersion at the rising edge of the pulse when portions of the pulse are not well compressed. In the interaction of the laser pulse with a target, the preceding part of the pulse, such as pre-pulses or pedestals, can be highly detrimental if it has sufficient intensity to pre-ionize and pre-heat the target, affecting the overall interaction of the main pulse with it. An ultra-high temporal intensity contrast, spanning many orders of magnitude, is required to prevent pre-heating and plasma expansion at an early stage of the laser-target interaction enabling an interaction with an unperturbed target.

Examples of refocusing the beam using curved optics, specifically involving plasma mirrors, have been discussed in the prior art, such as in the following documents.

Document "High-Density Plasmas Produced by Ultrafast Laser Pulses" by M. M. Murnane et al., Phys. Rev. Lett. 62, 155, January 1989, relates to using ultrafast laser pulses for the generation of a dense plasma at the surface of a flat substrate.

Document "Prepulse energy suppression for high-energy ultrashort pulses using self-induced plasma shuttering" by H. C. Kapteyn et al., Optics Letters Vol. 16, Issue 7, pp. 490-492, April 1991, discloses a technique of self-induced plasma shuttering for suppressing the spurious pre-pulses that appear in the laser pulse amplification.

Document "Prepulse suppression using a self-induced ultrashort pulse plasma mirror" by D. M. Gold et al., Proceedings Volume 1413, Short-Pulse High-Intensity Lasers and Applications, June 1991, discloses that flat plasma mirror reflectivity can be very high, while the spatial profile is smooth, and the pulse duration can be additionally reduced.

Applications of a curved plasma mirror have been proposed in documents "Geometrical optimization of an ellipsoidal plasma mirror toward tight focusing of ultra-intense laser pulse" by A. Kon et al., Journal of Physics: Conference Series, Volume 244, Laser, Particle Beams, and Fusion Technology, 2010, and "Fast focusing of short-pulse lasers by innovative plasma optics toward extreme intensity" by M. Nakatsutsumi et al., Optics Letters Vol. 35, Issue 13, pp. 2314-2316, 2010, disclosing the use of an ellipsoidal plasma mirror to achieve a higher intensity by reducing the f-number to f/0.4.

Document "Development of Focusing Plasma Mirrors for Ultraintense Laser-Driven Particle and Radiation Sources" by R. Wilson et al., Quantum Beam Science, 2018-03, Vol.2 (1), p.1, January 2018, discloses an approach of casting in plastic a Computer Numerical Control machined metal ellipsoid. The ellipsoidal plasma mirror design has been used in several other applications.

Document "Self-generated surface magnetic fields inhibit laser-driven sheath acceleration of high-energy protons" by Nakatsutsumi et al., Nature Communications, Vol. 9, Article number 280, January 2018, discloses an implementation of an ellipsoidal plasma mirror technology on glass laser systems with longer pulses,

Document "Alignment of solid targets under extreme tight focus conditions generated by an ellipsoidal plasma mirror" by D. Kumar et al., Matter and Radiation at Extremes, Vol. 4, Issue No. 2, March 2019, discloses a retro-imaging-based target alignment system in combination with ellipsoidal plasma mirrors.

Document "A study of sacrificial mirrors for use prior to a laser wakefield accelerator driven by the Z-Petawatt laser" by B. R. Galloway et al., Sandia Report, SAND2022-6710, May 2022, discloses the use of an ellipsoidal plasma mirror for magnifying the focus and achieving a lower intensity on the target.

Further examples of curved plasma optics and plasma mirror implementations involving a single spherical mirror are disclosed in documents "Plasma mirror implementation on LFEX laser for ion and fast electron fast ignition" by A. Morace et al., Nuclear Fusion, Vol 57, No. 12, September 2017, and "Demonstration of a spherical plasma mirror for the counter-propagating kilojoule-class petawatt LFEX laser system" by S. Kojima et al., Optics Express Vol. 30, Issue 24, pp. 43491-43502, November 2022. One specialized curved plasma mirror with an off-axis parabolic surface has been proposed in a telescope configuration for producing a small and collimated laser beam.

Document "Experiment and simulation of novel liquid crystal plasma mirrors for high contrast, intense laser pulses" by P. L. Poole et al., Nature, Scientific Reports, 2016, No. 1, August 2016, discloses the use of flat plasma mirrors to flat liquid surfaces, which behave as recoverable plasma mirrors.

In optical configurations utilized in connection with high energy lasers, placing any optic in the high intensity beam (for intensities above ~10¹⁰ W/cm²) ionizes the substrate, above the ionization threshold, and generates plasma on its surface that acts as a high-efficiency mirror, hence the name "plasma mirror".

After the laser pulse has passed, the mirror substrate may be irreversibly damaged and needs to be replaced. For this reason, exclusively single-use reflective optics can be used when the beam intensity is above the ionization threshold. Hence, cost-effective and/or efficient manufacturing of such plasma mirror configurations is desired.

Furthermore, in examples of curved plasma mirrors as discussed above, the surface curvatures need to be specifically tailored to a particular experimental layout such that an aberration-free focus is obtained, which requires bespoke and expensive optical elements.

Specifically, the curved surface of the mirrors proposed in the prior art as discussed above typically represent higher-order curved surfaces, e.g., paraboloid plasma mirrors or ellipsoid plasma mirrors, which poses unique challenges for their alignment accompanied by a low reproducibility from shot to shot.

In view of the above, it is desirable to provide more cost-effective, versatile, and/or flexible optical designs, in particular for expanding the horizon of plasma mirror applications in terms of their utilization for focusing of beams of high-power lasers, in particular also in connection with efficient and/or reliable focus adjustment, aberration correction, contrast control and/or intensity control.

### SUMMARY

It is one object of the present disclosure to provide an apparatus for focusing of beams of high-power lasers utilizing a cost-effective, versatile, and/or flexible optical configuration.

It is another preferred object of the present disclosure to provide an apparatus for refocusing of beams of high-power lasers allowing for efficient and/or reliable focus adjustment, aberration correction, contrast control and/or intensity control.

For solving one or more of the above objects, an apparatus according to the independent claim is proposed. Further embodiments of the disclosure are presented in connection with the dependent claims.

According to an aspect of the present disclosure there is provided an apparatus for refocusing a beam of a high-power laser, in particular a multiple plasma mirror apparatus for refocusing a beam of a high-power laser. The apparatus may comprise an optical configuration of two or more curved plasma mirrors configured to focus the beam of the high-power laser, wherein, when the optical configuration is arranged with respect to a main axis of the beam of the high-power laser, a first curved plasma mirror of the two or more curved plasma mirrors is arranged on the main axis of the beam of the high-power laser, and/or a second curved plasma mirror of the two or more curved plasma mirrors is arranged off-axis with respect to the main axis of the beam of the high-power laser. The first curved plasma mirror may be configured to reflect the beam of the high-power laser in the direction of the second curved plasma mirror of the two or more curved plasma mirrors.

Herein, the term high-power laser refers to laser devices having a peak power of at least one Terawatt, in particular, high-power and/or short-pulse lasers which are configured to emit laser beam pulses at a peak power above one or more Terawatt, and potentially even above one or more Petawatt. In particular, the term high-power laser refers to high-power and/or short-pulse lasers which emit one or more laser pulses having peak energy densities above the ionization threshold of a plasma mirror. One may contemplate of Exawatt lasers exceeding the power of presently available laser devices.

In embodiments, the plasma mirrors are implemented to reflect, in particular pulsed, laser beams having an intensity of more than 10¹⁰/cm². A wavelength of the laser light is, for example, between 750 nm and 890 nm.

According to some embodiments, when the beam of the high-power laser is pre-focused, the optical configuration of the two or more curved plasma mirrors is configured to refocus the beam of the high-power laser at a lower f-number (or shorter focal length or larger numerical aperture) compared to an f-number (or initial focal length or initial numerical aperture) of the pre-focused beam of the high-power laser or to refocus (defocus) the beam of the high-power laser at a higher f-number (or longer focal length or smaller numerical aperture) compared to an f-number of the pre-focused beam of the high-power laser..

Herein, the beam of the laser may be pre-focused by one or more optional pre-focusing elements, before being incident on the first curved plasma mirror. Such optional pre-focusing elements may be provided internal to the apparatus or separately be placed between the laser and the apparatus.

According to embodiments, a mirror substrate material of one or more of the at least two plasma mirrors may comprise glass, preferably fused silica, borosilicate glass and/or crown glass, and/or plastic.

According to some embodiments, at least one of the two or more curved plasma mirrors may have a spherical reflecting surface. Furthermore, two or more or all curved plasma mirrors may have respective spherical reflecting surfaces.

According to some embodiments, the first curved plasma mirror may have a first spherical reflecting surface and/or the second curved plasma mirror may have a second spherical reflecting surface.

According to some embodiments, at least one of the two or more curved plasma mirrors may have a convex reflecting surface.

According to some embodiments, the first curved plasma mirror may have a convex reflecting surface. According to some embodiments, at least one of the two or more curved plasma mirrors may have a concave reflecting surface.

According to some embodiments, the second curved plasma mirror may have a concave reflecting surface.

According to some embodiments, the first curved plasma mirror may be tilted with respect to the main axis of the beam of the high-power laser.

Alternatively or additionally, according to some embodiments, the second curved plasma mirror may be tilted with respect to the main axis of the beam of the high-power laser.

According to some embodiments, the first and second plasma mirrors may be tilted at a same tilting angle with respect to the main axis of the beam of the high-power laser.

According to some embodiments, the tilting angle of the first curved plasma mirror and/or the second curved plasma mirror with respect to the main axis of the beam of the high-power laser may be in a range of substantially equal or larger than 4° and/or equal or smaller than 15°, preferably in a range of substantially equal or larger than 6° and/or equal or smaller than 8°°; or preferably in a range of substantially equal or larger than 11° and/or equal or smaller than 13° for defocusing applications.

According to some embodiments, the apparatus may be configured to enable a user adjustment of a distance between at least two of the two or more curved plasma mirrors, in particular in the adjustment direction parallel to the main axis of the beam of the high-power laser. According to some embodiments, the apparatus may be configured to enable a user adjustment of a distance between at least the first and second curved plasma mirrors, in particular in the adjustment direction parallel to the main axis of the beam of the high-power laser.

According to some embodiments, at least one of the two or more curved plasma mirrors may comprise an anti-reflective or high reflection coating on a side of a reflecting surface of the respective curved plasma mirror and/or an anti-reflective or high reflection coating on a back side opposite to the side of the reflecting surface.

According to some embodiments, the first curved plasma mirror may comprise an anti-reflective or high reflection coating on a side of a first reflecting surface of the first curved plasma mirror and/or an anti-reflective coating on a back side opposite to the side of the first reflecting surface.

According to some embodiments, the second curved plasma mirror may comprise an anti-reflective or high reflection coating on a side of a second reflecting surface of the second curved plasma mirror and/or an anti-reflective coating on a back side opposite to the side of the second reflecting surface.

According to some embodiments, the antireflective coating may comprise dielectric coatings, preferably magnesium fluoride, aluminum oxide, silicon oxide, hafnium oxide, magnesium oxide, zirconium oxide, yttrium oxide, or combinations thereof. The coating may also be metallic.

According to some embodiments, at least one of the two or more curved plasma mirrors may have a flat surface on a back side opposite of a side of a reflecting surface of the respective curved plasma mirror.

According to some embodiments, the first curved plasma mirror may have a flat surface on a back side opposite of a side of a first reflecting surface of the first curved plasma mirror.

According to some embodiments, the second curved plasma mirror may have a flat surface on a back side opposite of a side of a second reflecting surface of the second curved plasma mirror.

According to some embodiments, the second curved plasma mirror may be configured to reflect the beam of the high-power laser in the direction of a designated focus point, in particular when the apparatus comprises two curved plasma mirrors, in particular two spherical plasma mirrors, and/or in particular a first convex curved plasma mirror and a second concave curved plasma mirror.

According to some embodiments, the optical configuration may comprise three or more curved plasma mirrors, in particular three or more spherical plasma mirrors, and the second curved plasma mirror is configured to reflect the beam of the high-power laser in the direction of a third curved plasma mirror of the three or more curved plasma mirrors, and/or a respective final curved plasma mirror of the three or more curved plasma mirrors may be configured to reflect the beam of the high-power laser in the direction of a designated focus point.

According to some embodiments, the third curved plasma mirror can have a third spherical reflecting surface, and/or preferably the third curved plasma mirror has a concave reflecting surface.

According to another aspect of the present disclosure there is provided high-power laser system, comprising a high-power laser configured to emit a high-power laser beam along a main axis, and an apparatus for (re)focusing the beam of the high-power laser according to the above aspect or one or more of the above embodiments. The optical configuration of the apparatus may be arranged with respect to the main axis of the beam of the high-power laser.

Herein, the high-power laser is, for example, a high-power and/or short-pulse laser which is configured to emit laser beam pulses at a peak power above one or more Terawatt, e.g. equal or larger than 10 Terawatt and further preferably equal or larger than 100 Terawatt and potentially even above one or more Petawatt, for example a laser configured to emit ultrashort Multi-Petawatt pulses.

In some embodiments, the high-power laser can be realized as an ultrashort pulse laser as a laser that emits ultrashort pulses of light, generally of the order of femtoseconds to several picoseconds. In some embodiments, the high-power laser can comprise a Titanium-sapphire laser and/or a dye laser, e.g. a solid state dye laser (SSDL). One may, in particular, contemplate of lasers such as: Nd:glass laser, excimer (ArF, KrF) laser, or any other laser that produces ultrashort pulses.

According to some embodiments, the system may optionally further comprise one or more pre-focusing optical elements arranged between the high-power laser and the apparatus for focusing the beam of the high-power laser.

In embodiments, the apparatus comprises a housing implemented to keep the optical arrangement in a vacuum atmosphere.

On may contemplate that the apparatus comprises a plurality of optical arrangements. As the plasma mirrors may deteriorate after having focuses a predetermined number of laser pulses, a first optical arrangement can be replaced by a second one, e.g. through a revolver arrangement.

Further possible implementations or alternative solutions within the scope of the present disclosure also encompass combinations - that are not explicitly mentioned herein - of features described above or below with regard to the embodiments. The person skilled in the art may also add individual or isolated aspects and features to the most basic form of the present disclosure.

Further embodiments, features and advantages of the present disclosure will become apparent from the subsequent description and dependent claims, taken in conjunction with the accompanying drawings.

### BRIEF DESCRIPTION OF THE DRAWINGS

FIG. 1 schematically shows a side view of an apparatus for focusing a beam of a high-power laser according to a first embodiment.
FIG. 2 schematically shows a top view of an apparatus for focusing a beam of a high-power laser according to the first embodiment.
FIG. 3 schematically shows a side view of an apparatus for focusing a beam of a high-power laser according to a second embodiment.
FIG. 4 schematically shows a high-power laser system according to some embodiments.
FIG. 5 schematically shows a diagram indicative of a Point Spread Function resulting from a ray tracing simulation for a configuration according to the second embodiment.
FIG. 6 schematically shows diagrams indicative of measurements of a focal spot using a low-power and continuous-wave laser in an optical setup comprising two spherical mirrors according to the optical configuration of the first and second embodiments.
FIG. 7 schematically shows a high-power laser system according to some further embodiments.
FIG. 8 schematically shows a diagram indicative of a deformation of an adaptive mirror in the system according to FIG. 7.
FIG. 9A schematically shows a high-power laser system according to some further embodiments, and FIG. 9B schematically shows a side view of an apparatus for refocusing a beam of a high-power laser of the system of FIG. 9A according to a third embodiment.
FIG. 10 schematically shows a diagram indicative of a Point Spread Function resulting from a ray tracing simulation for a configuration according to the third embodiment.
FIG. 11 schematically shows a side view of an apparatus for refocusing a beam of a high-power laser according to a fourth embodiment.

### DETAILED DESCRIPTION

In the following, aspects and embodiments of the present disclosure will be described in more detail with reference to the accompanying figures. Same or similar features in different drawings and embodiments are referred to by similar reference numerals. It is to be understood that the detailed description below relating to various aspects and embodiments are not to be meant as limiting the scope of the present disclosure.

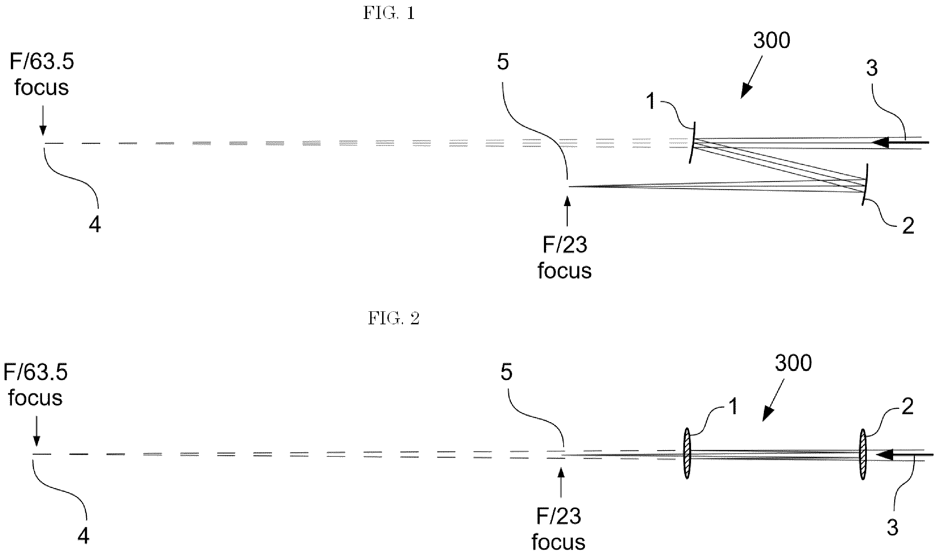

FIG. 1 schematically shows a side view of an apparatus 300 for (re)focusing a beam 3 of a high-power laser according to a first embodiment, and FIG. 2 schematically shows a top view of the apparatus 300 for (re)focusing a beam of a high-power laser according to FIG. 1.

As can be seen in FIGS. 1 and 2, the apparatus 300 comprises two curved plasma mirrors 1 and 2. A laser beam 3 of a high-power laser is emitted along the laser propagation direction as illustrated by the horizontal arrows on the right side of FIGS. 1 and 2.

As seen from a side view according to FIG. 1, the first (primary) curved plasma mirror 1 is arranged on a main axis of the laser beam 3 so that the laser beam 3 is emitted onto a reflecting surface (front side) of the first (primary) curved plasma mirror 1.

For example, the first curved plasma mirror 1 is realized as a convex plasma mirror 1 in FIG. 1. In some embodiments, the first curved plasma mirror 1 may preferably be realized as a spherical plasma mirror 1, in particular a spherically convex plasma mirror 1.

For example, the first plasma mirror 1 is tilted downwards so as to reflect the laser beam 3 towards a second (secondary) curved plasma mirror 2. For example, the second curved plasma mirror 2 is arranged off-axis with respect to the main axis of the laser beam 3, when viewed from the side view of FIG. 1.

In some other embodiments, the second curved plasma mirror 2 may be arranged off-axis with respect to the main axis of the laser beam 3, when viewed from the top view or from another direction.

As seen from a side view according to FIG. 1, the second curved plasma mirror 2 is arranged off-axis with respect to the main axis of the laser beam 3 such that the laser beam 3 is reflected from the first curved plasma mirror 1 onto a reflecting surface (front side) of the second curved plasma mirror 2.

For example, the second curved plasma mirror 2 is realized as a concave plasma mirror 2 in FIG. 1. In some embodiments, the second curved plasma mirror 2 may preferably be realized as a spherical plasma mirror 2, in particular a spherically concave plasma mirror 2. This allows to refocus the laser beam and produce an anastigmatic focus.

For example, the second plasma mirror 2 is tilted upwards so as to reflect the laser beam 3, which is reflected from the first curved plasma mirror 1, towards a designated focus point 5, which may be a position of a target.

In some embodiments, the tilting angles of the first and second plasma mirrors 1 and 2 may be the same tilting angle.

The tilting of the mirrors 1 and 2 is shown in the side view of FIG. 1 and cannot be seen in the top view of FIG. 2 since the mirrors 1 and 2 are tilted into the plane of FIG. 2.

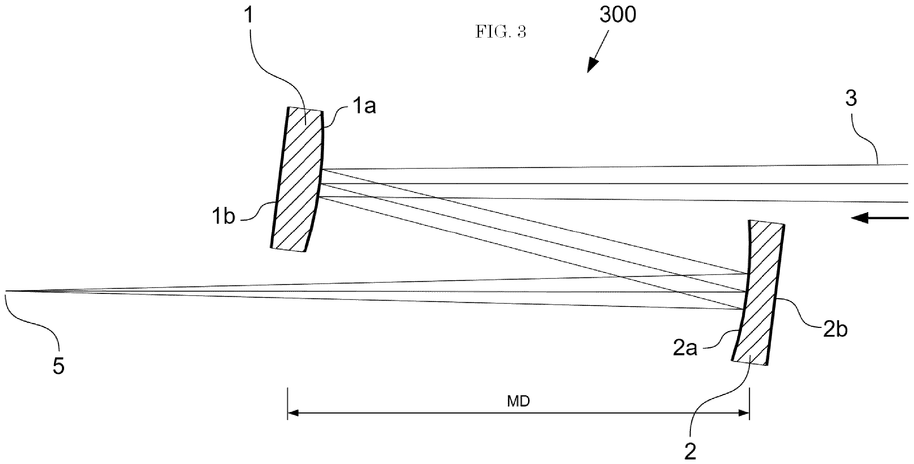

In other embodiments, the configuration of FIGS. 1 and 2 can be rotated about the main axis, e.g. so that FIG. 2 is a side view of FIG. 1 is a top or bottom view. The same applies to other configurations, such as the configuration illustrated in FIG. 3.

In some embodiments, the apparatus 300 comprising the first and second plasma mirrors 1 and 2 may be arranged between a target (e.g. positioned substantially at the designated focus point 5) and a high-power laser or a large aperture (pre-) focusing optic of the high-power laser.

For example, in the optical setup of FIGS. 1 and 2 comprising a convex first (e.g. spherical) plasma mirror 1 and a concave second (e.g. spherical) plasma mirror 2 can be operated as follows.

A laser beam 3 of a high-power laser, such as a Petawatt or even multi-Petawatt laser beam, may impinge onto the surface of the first (primary) plasma mirror 1 and thereby generate a plasma that efficiently reflects the beam 3 towards the second (secondary) plasma mirror 3. Similarly, the light may be reflected by the plasma formed on the second (secondary) plasma mirror 2.

According to the configuration of FIGS. 1 and 2, the configuration has been tuned to reduce (or refocus) an initial F/63.5 laser beam 3 (which would focus on initial focus point 4 in FIGS. 1 and 2; the initial F/63.5 beam propagation direction is shown with dashed lines) to a lower f-number such as F/23 at the output on a focus point 5, which results in an increase from 10²⁰ W/cm² to 5×10²⁰ W/cm².

**Table 1. Description of a specific non-limiting embodiment:**

| **Nr.** | **Description** | **Radius** | **Conic** | **Distance [mm]** | **Tilt** |
|---|---|---|---|---|---|
| 1 | Primary mirror | 155 | 0 | 41.9 | 7° |
| 2 | Secondary mirror | -103 | 0 | 70 | 7° |

The above Table 1 shows example values of parameters of spherical plasma mirrors 1 and 2 according to an embodiment in accordance with FIGS. 1 and 2.

Of course, such disclosed specific values of the specific embodiment are not meant to be limiting, and further embodiments can be provided with different parameters.

For example, the performance of the optical system 300 may be maintained for variations in the alignment given by the following tolerances: distance from primary mirror 1 can be varied by 5 mm (36.9 to 46.9 mm range), displacement of the primary mirror center by 2 mm (-2 to +2 mm range) and/or secondary mirror 2 by 3 mm (-3 to +3 mm range), tilt of the primary mirror 0.9° (6.1 to 7.9° range) and tilt of the secondary mirror 0.7° (6.3 to 7.7° range), radius of primary mirror by 30 mm (115 to 175 mm range) and/or radius of secondary mirror by 10 mm (-113 to -93 mm range).

To achieve high reflectivity for the plasma mirrors, the intensity of the laser beam on both plasma mirrors 1 and 2 may preferably be set in the range of 10¹⁶-10¹⁷ W/cm², and test results could show a total reflectivity in the range of 70%.

The aforementioned range does not limit the intensities on the plasma mirrors, for various lasers it may be advantageous to use other intensities such as 10¹⁵-10¹⁸ W/cm².

It could be found that the double plasma mirror configuration, such as shown in FIGS. 1 and 2, can improve the contrast significantly, e.g., even by at least 4 orders of magnitude.

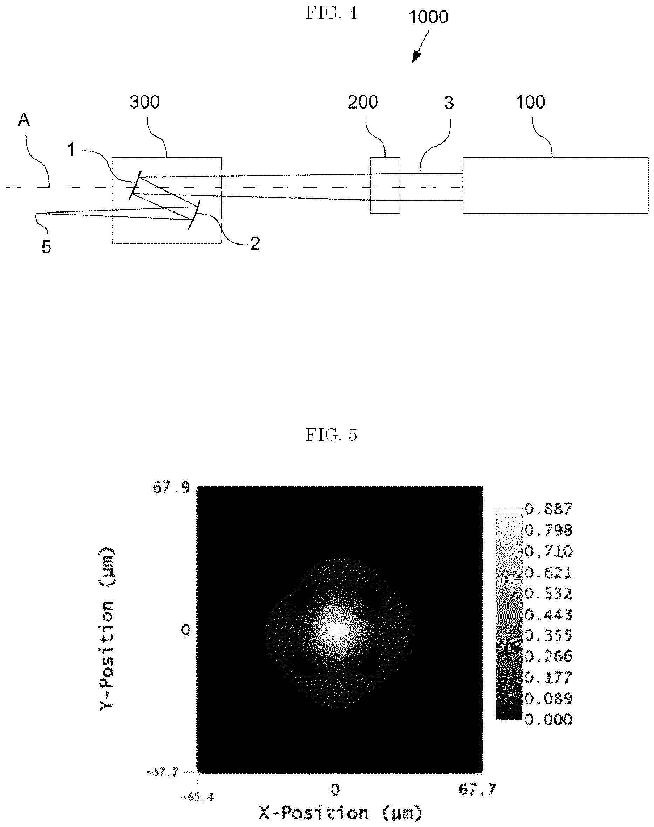

Also, a Point Spread function simulation could consistently illustrate that a high focus quality can be achieved, see e.g. FIG. 5 in connection with the second embodiment of FIG. 3.

FIG. 3 schematically shows a side view of an apparatus 300 for (re)focusing a beam of a high-power laser according to a second embodiment.

The configuration of FIG. 3 includes first and second plasma mirrors 1 and 2 similar to the first embodiment of FIGS. 1 and 2. The plasma mirrors 1 and 2 are shown as optical elements having front and back sides.

The plasma mirror bodies of the first and second plasma mirrors 1 and 2 may comprise materials such as one or more glasses, one or more metals, one or more plastics and/or one or more liquids and/or liquid crystal surfaces. Potential glass materials may include fused silica, borosilicate glass and/or crown glass.

For example,, the front side of the first curved plasma mirror 1 has a convex reflecting surface 1a, which preferably may be realized as a spherically convex reflecting surface 1a of a spherical plasma mirror 1. For example, a back side of the first curved plasma mirror 1 has a flat surface 1b.

For example, at least the curved reflecting surface 1a and preferably also the flat surface 1b of the first curved plasma mirror 1 is/are coated by one or more layers of an anti-reflective coating.

For example, the front side of the second curved plasma mirror 2 has a concave reflecting surface 2a, which preferably may be realized as a spherically concave reflecting surface 2a of a spherical plasma mirror 2. For example, a back side of the second curved plasma mirror 2 has a flat surface 2b.

For example, at least the curved reflecting surface 2a and preferably also the flat surface 2b of the second curved plasma mirror 2 is/are coated by one or more layers of an anti-reflective coating.

In some embodiments, a combination of different coatings on the first and second plasma mirrors 1 and 2 may be used to tune the balance between throughput and contrast cleaning level.

In some embodiments, the one or more anti-reflective coatings may cover the entire bandwidth of the laser beam (e.g. covering a bandwidth in a range substantially between 760 nm and 860 nm), and may be applied on both sides of each of the plasma mirrors 1 and 2 in some embodiments.

The embodiments above provide an optical architecture of two or more preferably spherical plasma mirrors 1 and 2 that can be used downstream of a high-power laser, such as, for example, after the large aperture focusing optic (see e.g. optical elements 200 in FIG. 4 described below) and before the interaction with the target, e.g. at or close to the focal point 5. In some embodiments, the focusing optic can include a spherical mirror and/or a parabolic mirror, for example, for compensation of aberrations.

The suggested apparatus may be employed to compensate for an aberration due to a large aperture focusing optic.

The plasma mirror property of reflecting the laser only when the intensity surpasses a threshold, in particular an ionization threshold, can be advantageously used for temporal contrast enhancement in short-pulse lasers. That is, the low intensity pre-pulse may pass through the optical substrate of the plasma mirror, but the high intensity pulse, such as the main pulse, is reflected by the plasma that it generated on the substrate surface of the reflecting surface of the plasma mirror and later directed to interact with the intended target.

In contrast to conventional optics, plasma mirrors are of a single use and relax the limitation of keeping the laser intensity below the damage threshold, therefore plasma mirrors can be manufactured with much smaller clear apertures.

For example, the two (preferably spherical) curved plasma mirrors 1 and 2 are arranged in an optical arrangement such as in a tilted component telescope (e.g. similar to a conventional optics Schiefspiegler reflective telescope). This allows a very compact and reliable design, enabling to avoid large optics used in the laser delivery beamline for transporting and focusing, which are typically required in common high power laser optical designs and which are expensive and do not allow for a facile exchange to a different numeric aperture configuration.

For example, the shapes of the reflecting surfaces of the plasma mirrors 1 and 2 in the above embodiments are preferably chosen such that the tilt aberrations from each optic cancel out. Advantageously, two mirrors such as in the above embodiments produce a focus with significantly reduced aberrations, specifically an anastigmatic focus, hence providing advantageous aberration compensation, at most with some residual aberration, in the low order Zernike terms, that can be easily corrected with the help of a deformable mirror that is usually part of any high-power laser beamline. Accordingly, it is possible to provide a compact, reliable and cost-effective design that further involves reliable and effective aberration compensation.

While designs with a single plasma mirror have a limited improvement for the contrast and make it difficult to change the direction of beam propagation in the vacuum chamber, typically hindered by space constraints within the chamber, the configuration according to the embodiments involving a multiple plasma mirror optical setup is flexible and has a wide applicability for various laser systems, and it can be further used to change directions of the beam propagation with compact configurations despite space constraints in the vacuum chamber.

Since spherical optics are readily available and can be manufactured very cost-effectively, in contrast to the higher-order surface shapes, such as paraboloid plasma mirrors or ellipsoid plasma mirrors, therefore allowing the user to choose from a large range of f/# on the target. Hence, it can be considered preferable that spherical plasma mirrors 1 and 2 are used. Additionally, the compensating nature of the tilt aberrations on spherical surfaces results in lower sensitivity to the alignment than in higher-order surface mirror.

Furthermore, spherical optics are readily available and can be manufactured more cost-effectively than higher-order surfaces, such as ellipsoidal or parabolic surfaces, which are complicated to polish due to the complex surface geometry preventing scalability in production, which makes them much more expensive than the radially symmetric spherical optics.

Furthermore, while the alignment of ellipsoidal mirrors is complex due to the many degrees of freedom that need to be controlled to a high level of precision and the setup of the ellipsoidal plasma mirrors results in a congested design that hinders manipulating the targets, the use of spherical plasma mirrors is less complex and can be provided in a compact and reliable manner.

Furthermore, spherical optics with fixed curvature radii can provide varying f/# by moderately changing the distances between the optics allowing the user to tune the focus size. Hence, for example, the apparatus 300 is configured to enable a user adjustment of the distance MD (see e.g. FIG. 3) between the plasma mirrors 1 and 2, in particular in the adjustment direction parallel to the main axis of the laser beam 3. Accordingly, it is possible to provide a compact, reliable and cost-effective design that further allows for an adjustable focus.

Advantageously, the focus can also be magnified in a compact design, such as in the above embodiments, circumventing the requirement of a large vacuum chamber extension.

In addition to all the advantages discussed above, it is also possible to achieve similar contrast enhancement and high reflectivity as other approaches. Embodiments involving two (or more) plasma mirrors allow the user to route the high-power beam more flexibly inside the chamber and are an excellent balance of pulse cleaning efficiency and throughput.

Furthermore, control on the balance between throughput and pulse cleaning can be achieved through a combination of anti-reflection and high-reflection coated optics in some embodiments.

According to embodiments, the antireflective coating may comprise dielectric coatings, preferably magnesium fluoride, aluminum oxide, silicon oxide, hafnium oxide, magnesium oxide, zirconium oxide, yttrium oxide, or combinations thereof. The coating may also be metallic.

FIG. 4 schematically shows a high-power laser system 1000 according to some embodiments.

For example, the system 1000 comprises a high-power laser 100 configured to emit the laser beam 3 along a main axis A.

For example, the system 1000 further comprises an optional pre-focusing apparatus 200 including one or more optical focusing elements, which can be provided downstream of the laser 100 so as to provide a large aperture focus (e.g. so as to provide the F/63.5 laser beam 3 of FIGS. 1 and 2).

For example, the system 1000 further comprises an apparatus 300 for focusing or refocusing the laser beam 3 by an optical configuration of two or more plasma mirrors, such as plasma mirrors 1 and 2 according to FIGS. 1, 2 and/or 3.

Specifically, it is to be noted that, while above embodiments have been discussed in connection with example configurations containing two curved plasma mirrors 1 and 2, the present disclosure is not limited to two mirror configurations. Further embodiments can be provided by configurations including three or more curved plasma mirrors, such as e.g. three or more spherical plasma mirrors, and is referred to below.

For example, some further embodiments may relate to three-mirror anastigmatic configurations made up of three spherical plasma mirrors, and such configurations may provide even more degrees of freedom, such as, allowing the elimination of the residual aberrations even for small f/# values of the resulting beam.

FIG. 5 schematically shows a diagram indicative of a Point Spread Function resulting from a ray tracing simulation for a configuration according to the second embodiment.

As mentioned above, a Point Spread function simulation as obtained by the ray tracing simulation for the configuration according to the second embodiment of FIG. 3 could consistently illustrate that a high focus quality can be achieved.

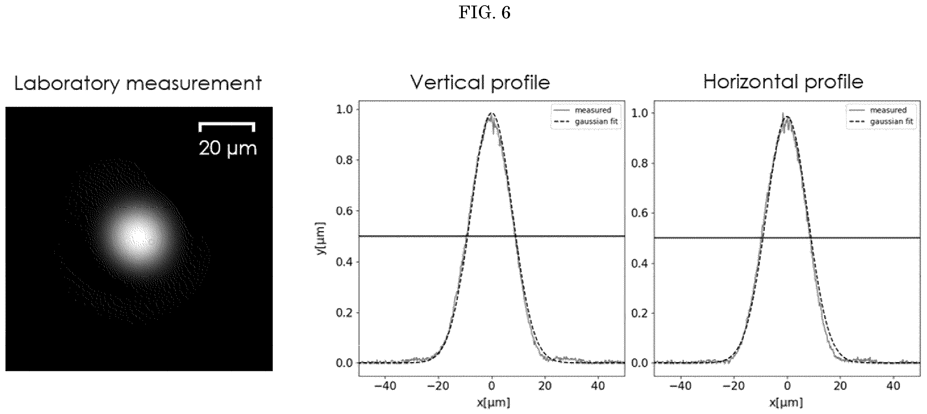

FIG. 6 schematically shows diagrams indicative of measurements of a focal spot using a low-power and continuous-wave laser in an optical setup comprising two spherical mirrors according to the optical configuration of the first and second embodiments.

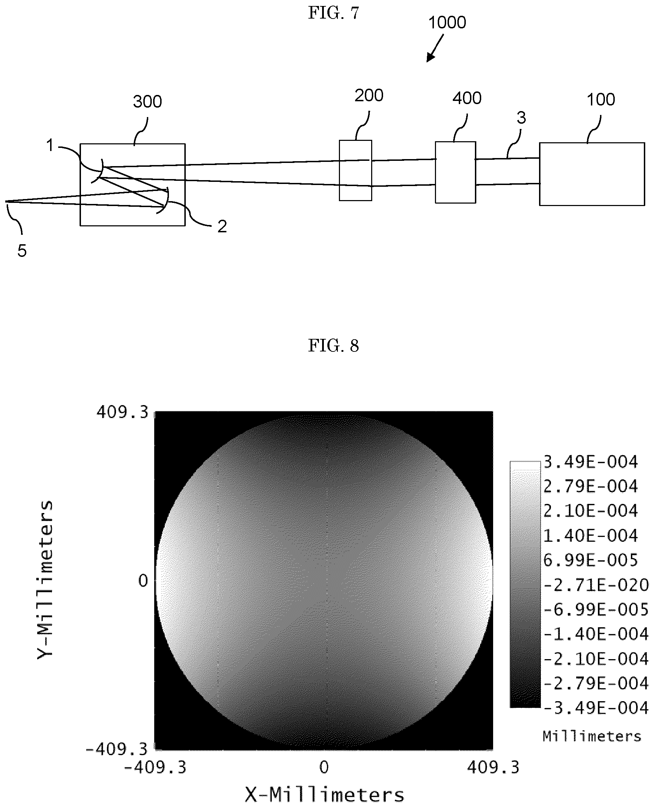

FIG. 7 schematically shows a high-power laser system 1000 according to some further embodiments.

For example, the system 1000 comprises a high-power laser 100 configured to emit the laser beam 3 along a main axis A.

For example, the system 1000 further comprises an optional pre-focusing apparatus 200 including one or more optical focusing elements, which can be provided downstream of the laser 100 so as to provide a large aperture focus (e.g. similar to the embodiment of FIG. 4).

Further, the system 1000 further comprises an optional adaptive mirror 400, such as a deformable mirror, for example, which is arranged between the high-power laser 100 and the optional pre-focusing apparatus 200.

For example, the system 1000 further comprises an apparatus 300 for focusing or refocusing the laser beam 3 by an optical configuration of two or more plasma mirrors, such as plasma mirrors 1 and 2 according to FIGS. 1, 2 and/or 3.

An adaptive mirror, such as adaptive mirror 400 in the embodiment of FIG. 7, is oftentimes present in high-power laser beamlines (e.g. separately provided or provided as a part of the high-power laser system 100).

For example, such adaptive mirror 400 can be employed (e.g. separately provided or provided as a part of the high-power laser system 100) to correct the residual aberrations, for example, when a smaller F/# is desired, given that the plasma mirror system of the apparatus 300 may introduce minor residual aberrations that affect the focus. Such embodiments comprising two or more spherical optics of the apparatus 300 used in conjunction with an adaptive mirror 400 can for example, produce an F/16 focus with a moderate deformation of the adaptive mirror 400 (see e.g. FIG. 8).

**Table 2. Description of another specific non-limiting embodiment:**

| **Nr.** | **Description** | **Radius** | **Conic** | **Distance** | **Tilt** |
|---|---|---|---|---|---|
| 1 | Deformable mirror (400) | Infinity, vertical astigmatism (6th Zernike term 8.513·10⁻⁶) | 0 | 45000 | 45° |
| 2 | Focusing mirror (200) | -61000 | 0 | 30279.82 | 0° |
| 3 | Primary mirror (1) | 105 | 0 | 43.5 | 6.96° |
| 4 | Secondary mirror (2) | -103 | 0 | 76 | 6.96° |

The above Table 2, for example, shows specific values of parameters of spherical plasma mirrors 1 and 2, the deformable mirror 400 and a focusing mirror 200 according to an embodiment in accordance with FIG. 7. In Table 2, units of the mirror radius and distance are given in units of mm. Of course, such disclosed specific values of the specific embodiment are not meant to be limiting, and further embodiments can be provided with different parameters.

FIG. 8 schematically shows a diagram indicative of a deformation of an adaptive mirror 400 in the system 1000 according to FIG. 7.

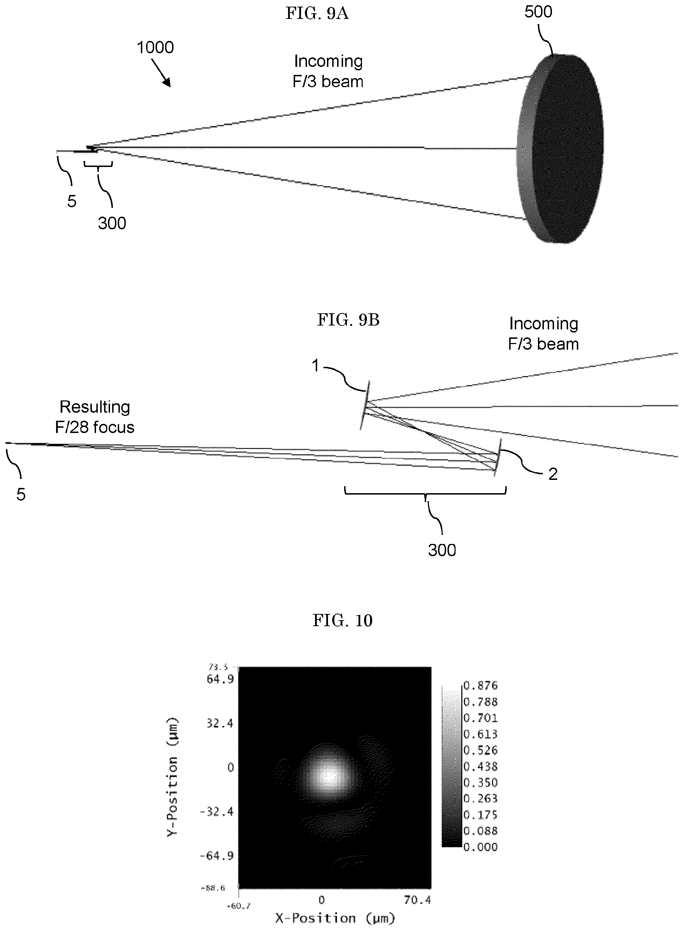

FIG. 9A schematically shows a high-power laser system 1000 according to some further embodiments, and FIG. 9B schematically shows a side view of an apparatus 300 for focusing a beam of a high-power laser of the system 1000 of FIG. 9A according to a third embodiment.

The system 1000, for example, comprises a parabolic mirror 500 (for example, an off-axis parabolic mirror, which can be tilted at a comparatively large angle such as, e.g. tilted substantially at 45°). In the embodiment of FIGS. 9A and 9B, the parabolic mirror 500 is arranged upstream of the apparatus 300 as an off-axis parabolic mirror 500. For example, the parabolic mirror 500 prefocuses the laser beam at an f-number of F/3.

For example, the system 1000 further comprises an apparatus 300 for refocusing or refocusing the laser beam 3 by an optical configuration of two or more plasma mirrors, such as plasma mirrors 1 and 2 according to FIGS. 1, 2, 3 and/or 7. For example, the apparatus 300 for refocusing (defocusing) the laser beam to an f-number of F/28.

In the system 1000 of FIGS. 9A and 9B, the apparatus 300 defocuses an F/3 incoming beam to F/28. The laser beam is focused initially with an 45° off-axis parabolic mirror 500 that can be part of the laser delivery beamline in some embodiments. The off-axis mirror alignment can also be adjusted to achieve an aberration-free focus (see e.g. FIG. 10 described below).

**Table 3. Description of another specific non-limiting embodiment:**

| **Nr.** | **Description** | **Radius** | **Conic** | **Distance** | **Tilt** |
|---|---|---|---|---|---|
| 1 | Off-axis parabolic mirror (500) | -2560.66 | -1 | 1490 | 45°, 0.015° X-axis tilt, 0.005° Y-axis tilt |
| 2 | Primary mirror (1) | 62.28 | 0 | 35.81 | 12° |
| 3 | Secondary mirror (2) | -36.33 | 0 | 127.71 | 12° |

Primary mirror 1 is convex, the secondary mirror 2 is concave.

The above Table 3 shows specific values of parameters of spherical plasma mirrors 1 and 2, and the parabolic mirror 500 according to an embodiment in accordance with FIGS. 9A and 9B. In Table 3, units of the mirror radius and distance are given in units of mm. Of course, such disclosed specific values of the specific embodiment are not meant to be limiting, and further embodiments can be provided with different parameters.

FIG. 10 schematically shows a diagram indicative of a Point Spread Function resulting from a ray tracing simulation for a configuration according to the third embodiment.

It is to be noted that, while above embodiments have been discussed in connection with example configurations containing two curved plasma mirrors 1 and 2, the present disclosure is not limited to two mirror configurations. Further embodiments can be provided by configurations including three or more curved plasma mirrors, such as e.g. three or more spherical plasma mirrors.

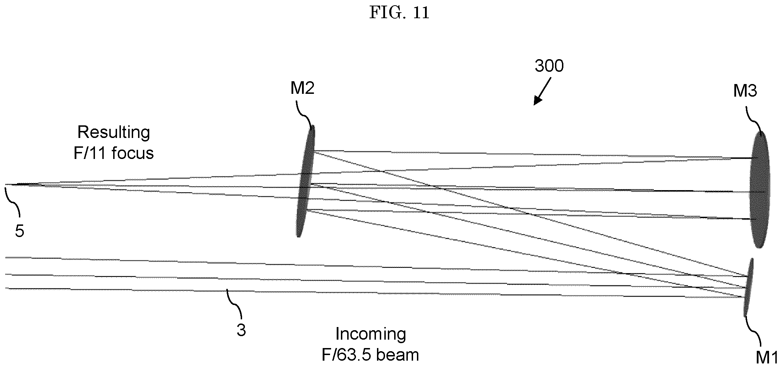

For example, some further embodiments may relate to three-mirror anastigmatic configurations made up of three spherical plasma mirrors, and such configurations may provide even more degrees of freedom, such as, allowing the elimination of the residual aberrations even for small F/# values of the resulting beam; see, for example, the embodiment according to FIG. 11 described below.

FIG. 11 schematically shows a side view of an apparatus 300 for refocusing a beam of a high-power laser according to a fourth embodiment.

For example, the apparatus 300 comprises three spherical plasma mirrors M1 (preferably having a convex primary plasma mirror), M2 (preferably a concave secondary mirror) and M3 (preferably a concave tertiary mirror) as a triple-mirror embodiment.

As in the above embodiments, the tilting angle of the primary and secondary plasma mirrors M1 and M2 is preferably substantially equal. Preferably, the tertiary plasma mirror M3 is tilted about a tilting axis that is perpendicular to the tilting axis of the primary and secondary plasma mirrors M1 and M2.

In FIG. 11, the apparatus 300 is configured to produce a anastigmatic focus with F/11 from an incoming beam of F/63.5.

**Table 4. Description of another specific non-limiting embodiment:**

| **Nr.** | **Description** | **Radius** | **Conic** | **Distance** | **Tilt** |
|---|---|---|---|---|---|
| 1 | Spherical mirror | -61000 | 0 | 30300 | 0° |
| 2 | Primary mirror (M1) | 57.41 | 0 | 60 | Vertical tilt 6.204° |
| 3 | Secondary mirror (M2) | -201.18 | 0 | 60 | Vertical tilt 6.204° |
| 4 | Tertiary mirror (M3) | -190.987 | 0 | 102.21 | Horizontal tilt 5° |

Primary mirror M1 is convex, the secondary mirror M2 is concave, and the tertiary mirror M3 is concave.

The above Table 4 shows specific example values of parameters of spherical plasma mirrors M1 to M3 and an optional additional spherical mirror (not shown) according to an embodiment in accordance with FIG. 11. In Table 4, units of the mirror radius and distance are given in units of mm. Of course, such disclosed specific values of the specific embodiment are not meant to be limiting, and further embodiments can be provided with different parameters.

Although the present invention has been described in accordance with embodiments, it is obvious for the person skilled in the art that modifications are possible in all embodiments. In particular, the expression "preferably" or "exemplary" is not to be construed as directing towards an essential or distinguished feature but merely refers to example embodiments. The term "focusing" may include the process of refocusing if a beam prior to impinging on the respective optical configuration is focused by another optical device.

## Claims

1. A apparatus (300) for focusing a beam (3) of a high-power laser (100), comprising
an optical configuration of two or more curved plasma mirrors (1, 2, M1, M2, M3) configured to focus the beam (3) of the high-power laser (100),
wherein, when the optical configuration is arranged with respect to a main axis (A) of the beam (3) of the high-power laser (100), a first curved plasma mirror (1, M1) of the two or more curved plasma mirrors (1, 2, M1, M2, M3) is arranged on the main axis (A) of the beam (3) of the high-power laser (100), and a second curved plasma mirror (2, M2) of the two or more curved plasma mirrors (1, 2, M1, M2, M3) is arranged off-axis with respect to the main axis (A) of the beam (3) of the high-power laser (100), and
wherein the first curved plasma mirror (1, M1) is configured to reflect the beam (3) of the high-power laser (100) in the direction of the second curved plasma mirror (2, M2) of the two or more curved plasma mirrors (1, 2, M1, M2, M3).

2. The apparatus according to claim 1, wherein
the optical configuration of the two or more curved plasma mirrors (1, 2) is configured, when the beam (3) of the high-power laser (100) is pre-focused, to refocus the beam (3) of the high-power laser (100) at a lower f-number compared to an f-number of the pre-focused beam (3) of the high-power laser (100) or to refocus the beam (3) of the high-power laser (100) at a higher f-number compared to an f-number of the pre-focused beam (3) of the high-power laser (100)..

3. The apparatus according to at least one of the preceding claims, wherein
at least one of the two or more curved plasma mirrors (1, 2, M1, M2, M3) has a spherical reflecting surface (1a; 2a).

4. Apparatus according to claim 3, wherein
the first curved plasma mirror (1, M1) has a first spherical reflecting surface (1a) and/or the second curved plasma mirror (2, M2) has a second spherical reflecting surface (2a).

5. Apparatus according to at least one of the preceding claims, wherein
at least one of the two or more curved plasma mirrors (1, 2, M1, M2, M3) has a convex reflecting surface, and in particular, the first curved plasma mirror (1, M1) has a convex reflecting surface (1a).

6. The apparatus according to at least one of the preceding claims, wherein
at least one of the two or more curved plasma mirrors (1, 2, M1, M2, M3) has a concave reflecting surface, an in particular, the second curved plasma mirror (2, M2) has a concave reflecting surface (2a).

7. Apparatus according to at least one of the preceding claims, wherein
the first curved plasma mirror (1, M1) is tilted with respect to the main axis (A) of the beam (3) of the high-power laser (100), and/or
the second curved plasma mirror (2, M2) is tilted with respect to the main axis (A) of the beam (3) of the high-power laser (100).

8. The apparatus according to claim 7, wherein
the first and second plasma mirrors (1, 2, M1, M2) are tilted at a same tilting angle with respect to the main axis (A) of the beam (3) of the high-power laser (100).

9. The apparatus according to at least one of the preceding claims, wherein
the apparatus (300) is configured to enable a user adjustment of a distance (MD) between at least two of the two or more curved plasma mirrors (1, 2, M1, M2, M3), in particular in a direction parallel to the main axis (A) of the beam (3) of the high-power laser (100).

10. The apparatus according to at least one of the preceding claims, wherein
at least one of the two or more curved plasma mirrors (1, 2, M1, M2, M3) comprises an anti-reflective or high reflection coating on a side of a reflecting surface (1a; 2a) of the respective curved plasma mirror and/or an anti-reflective coating on a back side opposite to the side of the reflecting surface (1a; 2a).

11. The apparatus according to at least one of the preceding claims, wherein
at least one of the two or more curved plasma mirrors (1, 2, M1, M2, M3) has a flat surface (1b; 2b) on a back side opposite of a side of a reflecting surface (1a; 2a) of the respective curved plasma mirror.

12. The apparatus according to at least one of the preceding claims, wherein
the second curved plasma mirror (2) is configured to reflect the beam (3) of the high-power laser (100) in the direction of a designated focus point (5)

13. The apparatus according to at least one of the preceding claims 1 - 11, wherein the optical configuration comprises three or more curved plasma mirrors (M1, M2, M3), and the second curved plasma mirror (M2) is configured to reflect the beam (3) of the high-power laser (100) in the direction of a third curved plasma mirror (M3) of the three or more curved plasma mirrors (M1, M2, M3, and a respective final curved plasma mirror (M3) of the three or more curved plasma mirrors (M1, M2, M3) is configured to reflect the beam (3) of the high-power laser (100) in the direction of a designated focus point.

14. The apparatus according to claim 13, wherein
the third curved plasma mirror (M3) has a third spherical reflecting surface, and/or the third curved plasma mirror (M3) has a concave reflecting surface.

15. A high-power laser system (1000), comprising:
a high-power laser (100) configured to emit a high-power laser beam (3) along a main axis (A);
an apparatus (300) for focusing the beam (3) of the high-power laser (100) according to at least one of the preceding claims, the optical configuration of the apparatus being arranged with respect to the main axis (A) of the beam (3) of the high-power laser (100); and
optionally one or more pre-focusing optical elements (200, 400, 500) arranged between the high-power laser (100) and the apparatus (300) for focusing the beam (3) of the high-power laser (100).
